(19) 

**Europäisches Patentamt**

**European Patent Office**

**Office européen des brevets**

(11) **EP 2 164 226 B1**

(12) **EUROPEAN PATENT SPECIFICATION**

(45) Date of publication and mention
of the grant of the patent:
**19.05.2010 Bulletin 2010/20**

(51) Int Cl.:
*H04L 29/06* *(2006.01)*    *H04L 12/22* *(2006.01)*

(21) Application number: **08290859.1**

(22) Date of filing: **10.09.2008**

(54) **Secure composition of web services**

Sichere Zusammensetzung von Webdiensten

Composition sécurisée pour services Web

(84) Designated Contracting States:
**AT BE BG CH CY CZ DE DK EE ES FI FR GB GR
HR HU IE IS IT LI LT LU LV MC MT NL NO PL PT
RO SE SI SK TR**

(43) Date of publication of application:
**17.03.2010 Bulletin 2010/11**

(73) Proprietor: **SAP AG**
**69190 Walldorf (DE)**

(72) Inventors:
• **Montagut, Frederic**
**8045 Zürich (CH)**
• **Sorniotti, Alessandro**
**06600 Anlibes (FR)**
• **Villalonga, Claudia**
**8001 Zürich (CH)**

(74) Representative: **Lehmann, Judith Christina**
**Hössle Kudlek & Partner**
**Patentanwälte**
**Postfach 10 23 38**
**70019 Stuttgart (DE)**

(56) References cited:
**WO-A-2008/015417    US-A1- 2007 162 976**

• **CARMINATI B ET AL: "Web Service Composition:
A Security Perspective" WEB INFORMATION
RETRIEVAL AND INTEGRATION, 2005. WIRI '05.
PROCEEDINGS . INTERNATIONAL WORKSHOP
ON CHALLENGES IN TOKYO, JAPAN 08-09
APRIL 2005, PISCATAWAY, NJ, USA,IEEE, 8 April
2005 (2005-04-08), pages 248-253, XP010860584
ISBN: 978-0-7695-2414-6**

## Description

## Technical Field

The present disclosure refers to a method and a system for automating an integration of security features as part of a composition procedure of web services.

## State of the Art

Current approaches in web services composition do not take into account security requirements defined by workflow designers. It, however, becomes critical to consider the security requirements non-functional attributes within an automatic composition of web services. Composite application designers may indeed specify some security requirements in addition to functional ones which should be satisfied by candidate web services in order to be assigned to respective tasks of a workflow which represents a composite web service which is to be designed.

There are several prior art documents which deal with security and trust of a composite web service, the composite service also being designated as a composite application.

In "S. J. H. Yang, J. S. F. Hsieh, B. C. W. Lan, and J.-Y. Chung. Composition and evaluation of trustworthy web services. In BSN '05: Proceedings of the IEEE EEE05 international workshop on Business services networks, pages 5-5, Piscataway, NJ, USA, 2005. IEEE Press.", an approach is proposed in order to compute the trust of a composite application given the trust of the respective component web services. However, this document does not introduce any composition procedure integrating security mechanisms when generating a composite web service on the basis of a plurality of component web services.

In "B. Carminati, E. Ferrari, and P. C. K. Hung. Web service composition: A security perspective. In WIRI'05: Proceedings of the International Workshop on Challenges in Web Information Retrieval and Integration, pages 248-253, Washington, DC, USA, 2005. IEEE Computer Society.", a solution is proposed for the composition of web services based on security compatibility between respective component web services. This document does not focus on security requirements that may be specified by designers at a workflow design phase but rather on whether the respective candidate component web services will accept to communicate with each other. Therefore, this document does not provide a tool enabling designers to specify security requirements in terms of security mechanisms and also no procedure relying on the latter.

In "L. Singaravelu and C. Pu. Fine-grain, end-to-end security for web service compositions. In IEEE SCC, pages 212-219, IEEE Computer Society, 2007.", a solution is proposed to manage security during the runtime of composite applications to assure for instance end-to-end confidentiality but no composition algorithm is proposed.

In "H. Song, Y. Sun, Y. Yin, and S. Zheng. Dynamic weaving of security aspects in service composition. In SOSE'06: Proceedings of the Second IEEE International Symposium on Service-Oriented System Engineering, pages 189-196, Washington, DC, USA, 2006. IEEE Computer Society.", a framework is proposed to adapt component web services as part of a composite application in order to meet some security requirements but no approach towards integrating these security requirements as part of the composition process is proposed.

In "D.-H. Xua, Y. Qi, D. Hou, Y. Chen, and L. Liu. A formal model for security-aware dynamic web services composition. In Computational Science and its Applications, 2007. ICCSA 2007. International Conference on, pages 139-143, 2007.", a formal model is proposed to secure composite applications but no procedure towards actually building the latter based on security mechanisms.

In "F. Montagut and R. Molva. Augmenting Web services composition with transactional requirements. In ICWS 2006, IEEE International Conference on Web Services, September 18-22, 2006, Chicago, USA, Sep 2006.", an approach is proposed for an integration of transactional requirements into the composition of web services.

A lot of further research has been performed on a composition of web services based on functional attributes as described, e.g., in "L. A. G. da Costa, P. F. Pires, and M. Mattoso. Automatic composition of web services with contingency plans. In ICWS '04: Proceedings of the IEEE International Conference on Web Services (ICWS '04), page 454, Washington, DC, USA, 2004. IEEE Computer Society.", "S. V. Hashemian and F. Mavaddat. A graph-based approach to web services composition. In SAINT '05: Proceedings of the The 2005 Symposium on Applications and the Internet (SAINT '05), pages 183-189, Washington, DC, USA, 2005. IEEE Computer Society.", "M. Laukkanen and H. Helin. Composing workflows of semantic web services. In Proceedings of the Workshop on WebServices and Agent-based Engineering, 2003.", and "V. Agarwal, K. Dasgupta, N. Karnik, A. Kumar, A. Kundu, S. Mittal, and B. Srivastava. A service creation environment based on end to end composition of web services. In WWW '05: Proceedings of the 14th international conference on World Wide Web, pages 128-137, New York, NY, USA, 2005. ACM Press".

The American patent application US2007/0162976 describes a system for automated composition of web services including security restrictions to be applied to the product to be achieved.

## Summary

None of the cited prior art does actually integrate security requirements expressed in terms of security mechanisms or security features as part of a composition procedure for generating a composite web service based on a plurality of candidate component web services.

Hereinafter, "composite application", and "composite web service" are used synonymously. The terms "web service" and "service" are also used synonymously. The terms "workflow" and "workflow model" are also interchangeable one with another. The same applies to the expressions "advertised security features and "advertised security mechanisms".

As described before, the cited prior art does not take into account security requirements defined by workflow designers in a composition of web services. Therefore, there is a need for a process to automate a secure composition of web services.

A variety of services may be available to be used for a generation of a composite web service. It may be desired to compose web services of a variety of web services so that the composition of the web services is performed not only according to functional attributes but also to security ones. It may be desired to consider security features non-functional attributes during an automatic composition of web services.

Therefore, an aspect of the present disclosure, includes a method according to claim 1.

The method is disclosed in independent claim 1 and a method with further optional features is disclosed in following claims dependent on independent claim 1.

Thereby, it is possible that the acceptable sets of security features which are associated with the particular workflow model representing a composite web service are matched against the advertised security features which are supported by available candidate web services.

Furthermore, according to a further implementation, it is possible that, given the particular workflow W consisting of n tasks $(t_j)_{i} \in [1,n]$, the assignment procedure outputs a compliant composite web service $W_s = (s_i)$ $i \in [1,n]$ composed of a set of n component services $s_i$ that have been assigned to the tasks $(t_i)_{i \in [1,n]}$ of the particular workflow W.

The acceptable sets of security features designated as $(sf_j(W))_{j \in [1,1]}$ and associated with a particular workflow model W which represents a composite web service C, and the advertised security features designated as $SMS(s_i)$ which are supported by available candidate web services $(s_i)$ can be described using WSDL (Web Service Definition Language).

According to another possible implementation, for the particular workflow W an operator security features is provided that associates with each task of the workflow W a set of security mechanisms $(sf^k(W))_{k \in [1,n]}$ .

Thereby, it is possible that the sets of security mechanisms, each being associated with a respective task, and the acceptable sets of security features $(sf_j(W))_{j \in [1,1]}$ associated with the workflow W are represented in form of a matrix or table, thus indicating existing overlapping between the sets of security mechanisms, each being associated with a respective task, and the acceptable sets of security features $(sf_j (W))_{j \in [1,1]}$ associated with the workflow W.

The secure compliant composite web service $W_s(s_i)_{i \in [1,n]}$ can be described in that it satisfies the following proposition:

$$\exists \eta \in [1,1] \text{ such that } \forall i \in [1, n] \; sf_\eta^i(W) \subseteq SMS(s_i)$$

wherein $SMS(s_i)$ corresponds to a set of security mechanisms of a respective component web service $s_i$.

It is possible that after each iteration i a partial workflow instance $W_s^i$ is created and a group of sets of security features $ASF_c(W_s^i) = sf_h(W_s^i)_{h \in [1,m]}$ associated with the partial workflow instance $W_s^i$ and whose elements are satisfied by the partial workflow instance $W_s^i$ are determined. Thereby, the group of sets of security features associated with the partial workflow instance $W_s^i$ is a subset of the group of sets of security features $ASF_c(W) = (sf_j(W))_{j \in [1,1]}$ associated with the particular workflow W. Based on the group of sets of security features $ASF_c(W_s^i) = (sf_h(W_s^i))_{h \in [1,m]}$ associated with the partial workflow instance $W_s^i$, security requirements that are to be satisfied by candidate component services in order to be assigned to subsequent workflow tasks of the particular workflow are computed.

According to another implementation the candidate component services are computed by using the following conditions:

$$\forall i \in [1,n] \quad ASF_c(W_s^i) \subseteq ASF_c(W_s^{i-1}) \subseteq ASF_c(W)$$

wherein $ASF_c(W_s^0) = ASF_c(W)$ and $ASF_c(W_s^i)$ is the group of sets of security features associated with the partial workflow instance $W_s^i$ and $ASF_c(W)$ is the group of acceptable sets of security features associated with the particular workflow W.

Thereby it is possible that a service $s_a$ is classified as an adequate candidate component service to be assigned to task $t_a$ of the assignment procedure if:

$$\exists T \in Min_{sm}(s_a, t_a, W_s^i) = \left\{ sf_\gamma^a(W) \middle| sf_\gamma(W) \in ASF_c\left(W_s^{i-1}\right) \right\}$$

such that $T \subseteq SMS(s_a)$ wherein $SMS(s_a)$ are the advertised security features of service $s_a$.

A further aspect of the present disclosure includes a system for automating an integration of security features as part of a composition procedure of web services. The system has a modeling unit and an assignment unit. The modeling unit is configured to provide a model which allows to define acceptable sets of security features associated with a particular workflow model representing a composite web service, and to enable to advertise security features which are supported by available candidate web services. The assignment unit is configured to define, generate and perform, based on the model, an assignment procedure which allows to build, based on the available candidate web services, a secure compliant composite web service which satisfies at least one of the acceptable sets of security features of the workflow model, wherein the assignment procedure is an iterative process in that web services are assigned to workflow tasks one after the other such that after each iteration a subset of the at least one acceptable set of security features which is supported by the web services already assigned is analyzed in view of the next succeeding workflow task of the workflow model so as to be successively completed to the at least one acceptable set of security features by compliant candidate web services.

The system is discloses in independent claim 11 and a system with further optional features is disclosed in following claims dependent on claim 11.

According to a possible implementation, the assignment unit is configured to match acceptable sets of security features associated with the particular workflow model representing the composite web service against the advertised security features which are supported by available candidate web services.

Given the particular workflow W consisting of n tasks $(t_i)_{i\in[1,n]}$, the assignment unit may be configured to output a compliant composite web service $W_s=(S_i)_{i\in[1,n]}$ composed of a set of n component services $s_i$ that have been assigned to the tasks $(t_i)_{i\in[1,n]}$ of the particular workflow W.

The modeling unit may be configured to provide, for the particular workflow W an operator security features that associates with each task of the workflow W a set of security mechanisms $((sf^k(W))_{k\in[1,n]})$.

Furthermore, the modeling unit may be configured to represent the set of security mechanisms, each being associated with a respective task and the acceptable sets of security features associated with the workflow W in form of a matrix or table, thus indicating existing overlapping between the sets of security mechanisms, each being associated with a respective task, and the acceptable sets of security features $((sfj(W))_{j\in[1,1]})$ associated with the workflow W.

The assignment unit may be configured to create after each iteration i a partial workflow instance $W_s^i$ and to determine a group of sets of security features $ASF_c(W_s^i) = (sf_h(W_s^i))_{h\in[1,n]}$ associated with the partial workflow instance $w_s^i$ and whose elements are satisfied by the partial workflow instance $W_s^i$, the group of sets of security features associated with the partial workflow instance $W_s^i$ being a subset of the set of security features $ASF_c(W) = (sf_j(W))_{j\in[1,1]}$ associated with the particular workflow (W), and to compute, based on the group of sets of security features $ASF_c(W_s^i) = (sf_h(W_s^i))_{h\in[1,m]}$ associated with the partial workflow instance $W_s^i$, security requirements that are to be satisfied by candidate component services in order to be assigned to subsequent workflow tasks of the particular workflow.

The assignment unit may be configured to compute the candidate component services by using the following conditions:

$$\forall i \in [1,n] \quad ASF_c\left(W_s^i\right) \subseteq ASF_c\left(W_s^{i-1}\right) \subseteq ASF_c(W)$$

wherein $ASF_c(W_s^0) = ASF_c(W)$ and $ASF_c(W_s^i)$ is the group of sets of security features associated with the partial workflow instance $W_s^i$ and $ASF_c(W)$ is the group of sets of security features associated with the particular workflow W.

The assignment unit may classify a service $s_a$ as an adequate candidate component service to be assigned to task $t_a$ of the assignment procedure if:

$$\exists T \in Min_{sm}(s_a, t_a, W_s^i) = \left\{ sf_\gamma^a(W) \middle| sf_\gamma(W) \in ASF_c\left(W_s^{i-1}\right) \right\}$$

such that $T \subseteq SMS(s_a)$ wherein $SMS(s_a)$ are the advertised security features of service $_{Sa}$.

A further aspect includes a computer program product with instructions for a computer system. The instructions are configured to cause the computer system to perform the disclosed method, or to realize the proposed system, respectively.

The computer program product is disclosed in independent claim 21.

The purpose of the proposed method and system is to consider security features non-functional attributes during an automatic composition of web services. In order to achieve the latter an appropriate model is firstly defined so that on the one hand workflow designers can define security requirements associated with a particular workflow model and on the other hand to enable service providers to advertise security features offered by available candidate web services. Based on the latter, an assignment procedure is defined and generated that takes as input the defined security requirements as part of a composition procedure for a composite web service. The model allows to specify some security requirements that should be satisfied by a composite application. Those security requirements are then integrated automatically in a subsequent assignment procedure. The model makes it possible to match what is required as security features against what can be offered by available candidate web services in the same fashion as an usual match-making procedure for functional attributes.

The following description of examples includes details for illustrating embodiments and is not intended to limit the scope of the embodiments or to be exhaustive. For purposes of explanation, specific details are set forward in order to provide a thorough understanding of examples and embodiments. A person skilled in the art may appreciate that further embodiments may be practiced with details that differ from specific details.

Further features and embodiments will become apparent from the description and the accompanied drawings.

It will be understood that the features mentioned above and those described hereinafter can be used not only in the combination specified but also in other combinations or on their own, without departing from the scope of the present disclosure.

Various implementations are schematically illustrated in the drawings and are hereinafter explained in detail with reference to the drawings. It is understood that both the foregoing general description and the following description of various embodiments are exemplarily and explanatory only and are not meant to be restrictive or to be read into the claims. The accompanying drawings which are incorporated in a constitutive part of this specification, illustrate some embodiments, and together with the description serve to explain the principles of the embodiments described herein.

## Brief Description of the Drawings

In the drawings,

Figure 1 shows a schematic view of an embodiment of a system according to the present disclosure.

Figure 2 shows a further embodiment of a system according to the present disclosure.

Figure 3 shows a table as used as an input for the proposed assignment procedure, the table comprising defined security requirements as part of a composition procedure of a composite web service represented by a workflow model.

Figure 4 shows an example of a workflow model as used by an embodiment of the proposed method.

Figure 5 shows a table of web services available as candidate web services for a composition of a composite web service, the table indicating security features offered by the respective candidate web services and being used as an input for the proposed assignment procedure.

## Detailed Description

Given a workflow W consisting of n tasks $(t_i)_{i\in[1,n]}$ the proposed method outputs a workflow instance or composite web service $W_s$ composed of a set of n component web services that have been assigned to the tasks of the workflow W. The composite web service or the workflow instance can be described by $W_s = (s_i)_{i\in[1,n]}$.

Reference will now be made in detail to some embodiments, examples of which are illustrated in the accompanying drawings. Wherever possible, the same reference numbers are used throughout the drawings to refer to the same of like parts.

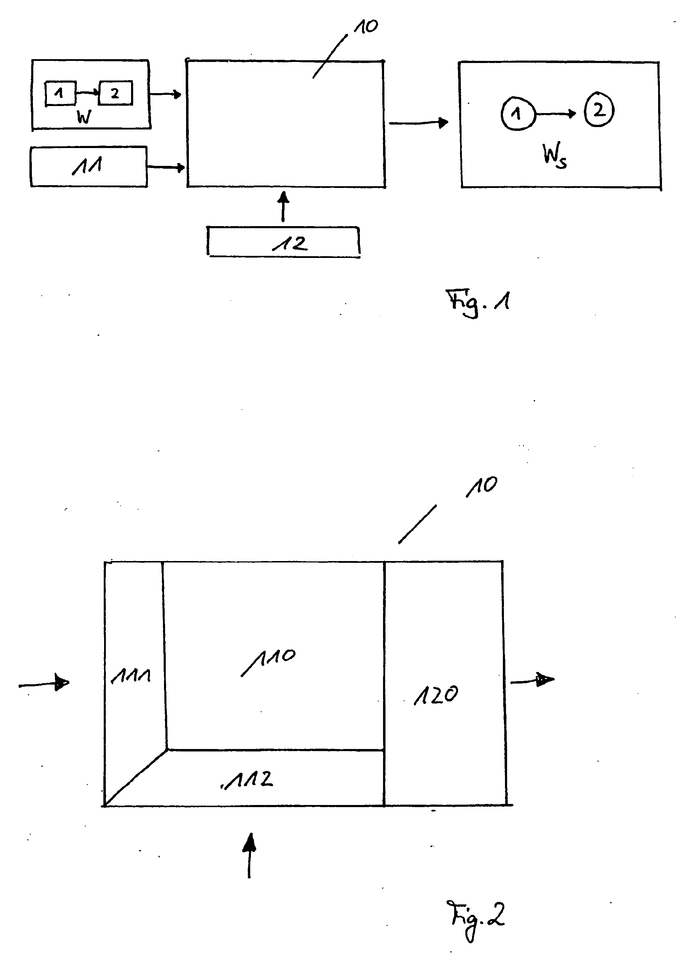

Figure 1 shows a very schematic view of a system as proposed by the present disclosure. The system is designated with reference number 10. A workflow W which is designed by a workflow designer is pregiven as an input to the proposed system 10. In the case, shown here, workflow W consists of two tasks 1, and 2. Furthermore, the workflow designer can specify some security requirements 11 for the workflow W which is also given as an input to the system 10. Besides the workflow W with its security requirements 11, it is possible to input available candidate web services 12 which can be composed to a composed web service. All available candidate web services 12 can be advertised together with security mechanisms which are satisfied by the respective web services. The proposed system 10 uses those inputs for an automatic generation of a composite web service, whereby the generated composite web service satisfies not only the functional attributes, namely by fulfilling the respective workflow tasks 1, and 2, but also the required security features 11 which were given as a further input by a respective workflow designer. The system 10 uses for the secure composition of the composite web service the candidate web services which are available and which are also given as an input to the system 10. Given the workflow W consisting of several tasks the system 10 outputs a workflow instance $W_s$ which fulfills the respective workflow tasks 1, and 2 and also meets the defined security requirements 11.

Figure 2 shows a second embodiment of a system according to the present disclosure. In the second embodiment, the system 10 is shown in further detail. The system 10 comprises a modeling unit 110 and an assignment unit 120. The system 10 further comprises an interface 111 via which a workflow W comprising a plurality of workflow tasks and security requirements defined for a respective workflow W can be provided as input to the modeling unit 110. The system 10 further comprises a second interface 112 which can be used to input available web services as potential candidate web services for a composition of a composite web service according to the inputted workflow model W. The web services can be provided together with respective sets of security mechanisms which are satisfied by the respective web services. The modeling unit 110 is configured to provide a model which allows to define, via the respective interface 111, acceptable sets of security features associated with an inputted particular workflow model representing a composite web service and to enable, via the second interface 112, to advertise security features which are supported by available candidate web services. The modeling unit 110 interfaces with the assignment unit 120. Via the interface 112 a service provider may advertise available web services and security mechanisms the web services support, e.g. an encryption or signature schemes, in a WSDL specification. The modeling unit 110 allows to receive acceptable sets of security features associated with the particular workflow model representing the composite web service which is to be composed and security features which are supported by available candidate web services which are to be used to compose the respective composite web service.

The modeling unit 110 cooperates with the assignment unit 120 in that the assignment unit 120 allows to define, generate and perform, based on the model which is provided by the modeling unit 110, an assignment procedure which allows to build, based on the available candidate web services, a secure compliant composite web service which satisfies at least one of the acceptable pregiven sets of security features of the workflow model.

The assignment procedure performed by the assignment unit 120 is an iterative process in that web services of a plurality of available web services are assigned to workflow tasks of the respective workflow model one after the other such that after each iteration a subset of the at least one acceptable set of security features which is supported by the web services already assigned is analyzed in view of the next succeeding workflow task of the workflow model so as to be successively completed to the at least one acceptable set of security features by compliant candidate web services. The composite web service is then outputted by the assignment unit 120 as a result of the secure composition of web services. It is to be noted that a definition of an ontology used by partners, i.e. service providers and workflow designers to specify security mechanisms is out of the scope of the present disclosure. It is assumed that all involved parties share a common ontology to advertise respective security mechanisms which are supported by the respective web services and which are required for a secure composition of web services.

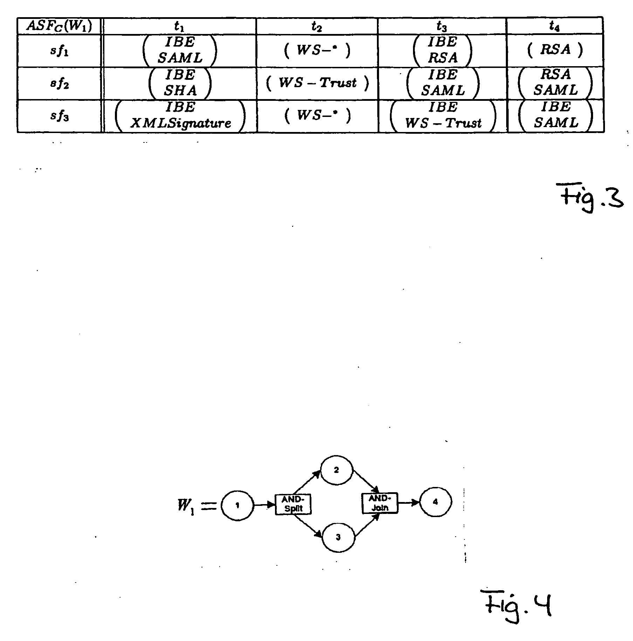

Figure 3 shows an exemplary presentation of acceptable sets of security features associated with a particular workflow model representing a composite web service. Those acceptable sets of security features can be pregiven by a workflow designer. The table represents acceptable sets of security features for a workflow model $W_1$. The workflow model $W_1$ comprises four workflow tasks $t_1$, $t_2$, $t_3$, and $t_4$. Those tasks are assigned, respectively, to different columns. For the whole workflow model $W_1$ there are defined three different sets of security features which are acceptable. Those sets of security features are assigned, respectively, to different rows. The different sets of security features are denoted as $sf_i$. A row which is assigned to a particular set of security features $sf_i$ indicates for each task $t_j$ an acceptable subset of security features $sf_i^j$ for this individual single task $t_j$. Therefore, the acceptable set of security features $sf_1$ indicates that for task $t_1$ the subset of security features $sf_1^1 = \{IBE, SAML\}$ is acceptable as a set of security features for this particular workflow task. The same acceptable set of security features $sf_1$ allows for the further workflow task $t_2$ the security feature $sf_1^2 = \{WS\text{-}*\}$. For the workflow task $t_3$, the acceptable set of security features $sf_1$ allows the subset of

security features $sf_1^3$ = {IBE, RSA}. Finally, the same acceptable set of security features $sf_1$ allows for the last workflow task $t_4$ the security feature $sf_1^4$ = {RSA}.

For the further acceptable sets of security features $sf_2$ and $sf_3$, there are different subsets of security features, respectively, which are allowable for the different single workflow tasks $t_1$ to $t_4$ as indicated in the respective rows of the table of figure 3.

A basic idea of the proposed dynamic web service composition is to select from a pool of available component web services those that satisfy pregiven security requirements which can be presented, as indicated in figure 3, in an appropriate table. As workflow designers do not know in advance what functionalities will be offered by candidate component web services at the composition stage, it is desired to be as flexible as possible so that a composition process can find a suitable set of component web services to execute a pregiven particular workflow.

In order to achieve this required flexibility it is proposed to provide a model which allows to define multiple acceptable sets of security features in order to specify security requirements associated with a composite web service which is to be generated. Therefore, acceptable sets of security features $sf_k(W)$ associated with a particular workflow model representing a composite web service are defined, each of which associates with each task $t_i$ of the workflow W a set of security mechanisms $SMT_i^k$ so that each acceptable set of security features $sf_k(W)$ can be given as $sf_k(W)$ = $(SMT_1^k,..., SMT_n^k)$={$sf_k^i(W)_{i \in [1,n]}$} wherein $k \in [1,1]$ i.e. there are 1 alternative acceptable sets of security features which are deemed to be sufficient in order to execute the composite web service. It is to be noted that each task $t_i$ is, thus, associated with a set of security mechanisms $SMT_i = SMT_i^1 \cup SMT_i^2 \cup .. \cup SMT_i^1$ in case that there exist 1 alternative acceptable sets of security features $sf_k(W)$.

In the following a group of acceptable sets of security features defined for a particular composite web service C which is represented by a workflow W is denoted as $ASF_C(W) = (sf_k(W))_{k \in [1,1]}$. This group $ASF_c(W)$ defines the acceptable sets of security features $sf_k(W)$ of workflow W, each set being deemed sufficient in order to execute the composite web service C which is to be generated.

Figure 3 shows a table which represents the group $ASF_c$ for the composite service C represented by a workflow $W_1$. The table basically represents a number of alternative sets of security features $sf_k$, each set of security features comprising sets of security mechanisms $SMT_i^k$ associated with respective tasks $t_i$ of the workflow $W_1$, wherein the security mechanisms are considered compliant with predefined requirements of the composite web service C.

Figure 4 shows a workflow example $W_1$, the workflow comprising four tasks $t_1$, $t_2$, $t_3$, and $t_4$. The workflow tasks are combined, thus representing a specific composite web service. Task $t_1$ is combined with the subsequent tasks $t_2$, and $t_3$, by an "AND-Split"-operator. Tasks $t_2$ and $t_3$ are combined with the final task $t_4$ by an "AND-Join"-operator.

In the following an exemplary actual assignment procedure that takes as input security requirements defined for a specific composite web service C based on a workflow W and a pool of available component services in order to build a secure composite application $W_s$ that meets the predefined security requirements $ASF_c(W)$ is specified. In the following such a composite web service $W_s$ is called a compliant composite web service or a compliant composite application and satisfies the following proposition:

$$\exists \eta \in [1,l] \text{ such that } \forall i \in [1,n] sf_\eta^i(W) \subseteq SMS(s_i) \quad (1)$$

In other words, a composite web service that satisfied at least one of the acceptable sets of security features $sf_j$ of the workflow W representing the composite service C is to be generated. In order to achieve this ultimate goal an assignment procedure is defined as follows. As already outlined before, the proposed assignment procedure is an iterative procedure, in that component web services are assigned to respective workflow tasks one after the other. Thus, after each iteration i a partial workflow instance $W_s^i$ is created. The generation process relies in that security properties offered by $W_s^i$ given the security mechanisms supported by the i web services already assigned matches at least one of the acceptable sets of security features for any step i of the assignment process. For all i in the interval [1,n] the set or group $(W_s^i)$ that is a subset of $ASF_c(W)$ whose elements are satisfied by the respective partial workflow instance $W_s^i$ is defined which gives the security mechanisms supported by the i component web services already assigned.

An aspect behind the proposed assignment procedure is the following. At each step i the security requirements that should be satisfied by a candidate web service in order to be assigned to a respective considered workflow task is computed. The security requirements basically depend on two aspects, namely what is directly required by the respective workflow task and what security mechanisms are offered by the web services assigned so far to the partial workflow instance $W_s^{i-1}$. The former, namely the security requirements of the respective workflow task can be easily derived from a respective $ASF_c(W)$ table as indicated in figure 3 for workflow $W_1$. These security requirements are direct requirements. The security requirements which are to be derived from the security mechanisms which are offered by the component web services which are already assigned are to be derived from the fact that the assignment of particular component web services impacts an assignment of further component web services. An assignment of a particular component web service to a task of a workflow representing a composite web service which is to be generated at a step i implies that a subset of the acceptable set of security features that is satisfied by the partial instance $W_s^{i-1}$ is no longer satisfied by the further partial workflow instance $W_s^i$. This subset can be empty provided that the further assigned component web service supports the adequate security mechanisms to meet all requirements associated with the considered task. Thus, actually setting $ASF_C(W_s^o) = ASF_C(W)$ the following expression is valid:

$$\forall\, i \in [1, n] \quad ASF_C(W_s^i) \subseteq ASF_C(W_s^{i-1}) \qquad (2)$$

Using the workflow instance acceptability condition, (2) is equivalent to:

$$\forall\, i \in [1, n] \quad ASF_C(W_s^i) \subseteq ASF_C(W_s^{i-1}) \subseteq ASF_C(W) \qquad (3)$$

From those two aspects that yield the expression (3), a set $Min_{sm}(s_a, t_a, W_s^i)$ is computed that defines the minimum set of security mechanisms that should be supported by a component service $s_a$ in order to be assigned to a task $t_a$ at a step i of the assignment procedure. Computation of the set $Min_{sm}(s_a, t_a, W_s^i)$ is derived from the above cited expression (3). A component web service is to be assigned to a task $t_a$ at the step i such that at least one element part of $ASF_C(W_s^{i-1})$ is satisfied by the new generated partial workflow instance $W_s^i$ so that the following proposition holds.

$$\exists\, \gamma \in [1, l] \quad such\ that \left\{ \begin{array}{l} sf_\gamma(W) \in ASF_c(W_s^{i-1}) \\ sf_\gamma^a(W) \subseteq SMS(s_a) \end{array} \right. \qquad (4)$$

$$Min_{sm}(s_a, t_a, W_s^i) = \left\{ sf_\gamma^a(W) \,\middle|\, sf_\gamma(W) \in ASF_C(W_s^{i-1}) \right\} \qquad (5)$$

In this case, a service s is an adequate candidate service to be assigned to task $t_a$ at step i of the assignment procedure if:

$$\exists\, T \in Min_{sm}(s_a, t_a, W_s^i)\ such\ that\ T \subseteq SMS(s)$$

As already mentioned above component web services which are available as candidate web services for composition of a composite web service, are assigned to each task of a workflow representing the composite web service to be generated, based on an iterative process. Depending on the single task requirements and the security mechanisms supported by the available web services which can be chosen for each task, different scenarios can occur when trying to assign task $t_a$ at step i:

(i) It exists a service s such that

$$\forall\, T\ \in\ \text{Min}_{sm}(s_a,\, t_a,\, W_s^i),\, T\subseteq \text{SMS}(s)\,.$$

In this case, s supports all the security mechanisms defined within $\text{Min}_{sm}(s_a,\, t_a,\, W_s^i)$ to be assigned to $t_a$.

(ii) A single service is available for the task.

(iii) A set of services $(S_k)_{k\in[1,p_i]}$ is available that verifies:

$$\forall k\ \in\ [1,\, p_i]\ \exists\Gamma_k\ \subset\ \text{Min}_{sm}(s_a,\, t_a,\, W_s^i)$$

such that

$$\forall T\ \in\ \Gamma_k,\, T\ \subseteq\ \text{SMS}(s_k)$$

In this case, a subset of the services available for the task supports adequate security mechanisms to be assigned to $t_a$ but none satisfy them all.

With view to the different scenarios, an idea is therefore to assign first web services to the tasks verifying (i) and (ii) since there is no flexibility in the choice of the web service. Tasks verifying (iii) for which it is not possible to make any decision are finally analyzed. Based on the security requirements raised by the remaining tasks, first, services are assigned to tasks for which there is no more flexibility as a result of previous assignments and this process is then iterated till it is no longer possible to assign any web service. At this point, only tasks remain that verify (iii) but for which no decision can be made. This particular iteration in the assignment procedure for which it is no longer possible to make direct assignment is denoted in the following as $i_s$. The goal here is to reach a solution to the problem if one exists that is find an element $sf_c(W)$ satisfied by at least one of the component web services available for each task that are still to be assigned. Thus, an acceptable set of security features $sf(W)$ is to be determined such that: for each $n-i_s+1$ task $t_k$ that are still to be assigned:

$$\exists s_k\ \text{available for}\ t_k\ \text{such that}\ sf^k(W)\subseteq \text{SMS}(s_k) \qquad (6)$$

Determining the previously formulated expression it can be achieved with an iterative procedure that takes as input the group $\text{ASF}_c(W_s^{i_\bullet-1})$ and determines the set of elements that satisfy (6). The assignment procedure reaches a solution if the set of those elements is not empty. In this case, there might be several web services available for the same task and the choice can be made based for instance on additional non-functional attributes including for instance trust.

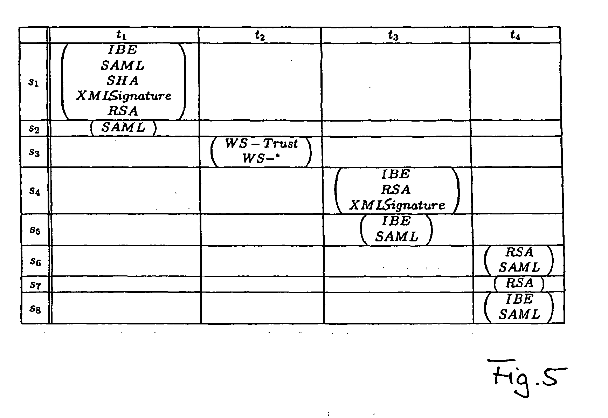

Considering the workflow example depicted in figure 4, the following example can be described. The table $\text{ASF}_c(W_1)$ as depicted in figure 3 is defined as acceptable sets of security features for the considered workflow $W_1$. The set of component web services which are available for each task of the workflow $W_1$ is depicted in figure 5.

An embodiment of the proposed assigning procedure starts by assigning services to tasks for which there is no flexibility.

This is the case for task $t_1$ for which service $s_1$ matches all security requirements associated with the task $t_1$. Indeed, it is true that

$$sf_1^1(W_1) \cup sf_2^1(W_1) \cup sf_3^1(W_1) \subseteq SMS(s_1),$$

because $sf_1^1(W_1)$ = {IBE, SAML} , $sf_2^1(W_1)$ = {IBE, SHA}, $Sf_3^1(W_1)$ = {IBE, XMLSignature} and SMS($s_1$) = {IBE, SAML, SHA, XMLSignature, RSA} . Thus $s_1$ can be assigned to $t_1$ and it holds that $ASF_C(W_s^1) = ASF_C(W_1)$ .

This is also the case for task $t_2$ for which a single service is available. Here it is true that $sf_1^2(W_1)$ = {WS -*} , $sf_2^2(W_1)$ = {WS - Trust} , $sf_3^2(W_1)$ = {WS -*} and SMS($s_3$) = {WS - Trust, WS -*}. Thus, it is true that $sf_1^2(W_1) \cup sf_2^2(W_1) \cup sf_3^2(W_1) \subseteq SMS(s_3)$ thus $ASF_C(W_s^2) = ASF_C(W_1)$ as $s_3$ matches all security requirements.

With respect to task $t_3$ both available services, namely $s_4$, and $s_5$, match the security requirements since it is true that $sf_1^3(W_1)$= {IBE,RSA}, $sf_2^3(W_1)$ = {IBE, SAML}, $sf_3^3(W_1)$ = {IBE, WS - Trust}, and SMS ($S_4$) = (IBE, RSA, XMLsignature), and SMS ($S_5$) = {IBE , SAML}. Before choosing one of the two available component web services task $t_4$ is to be considered. There are three different services $s_6$, $s_7$, and $s_8$ which can be chosen in order to fulfil task $t_4$. With respect to task $t_4$ it holds that $sf_1^4(W_1)$ = {RSA} , $sf_2^4(W_1)$ = {RSA, SAML} , $sf_3^4(W_1)$= {IBE, SAML} and thus $sf_1^4(W_1) \cup sf_2^4(W_1) \subseteq SMS(S_6)$ , $sf_1^4(W_1) \subseteq SMS(s_7)$ and $sf_3^4(W_1) \subseteq SMS(s_8)$.

No more web service can be directly assigned to any task and, therefore, is as defined above, is to be denoted as $i_s$=3 and $ASF_C$= ($W_s^{i_s-1}$) =$ASF_c(W_1)$. It can be shown that the minimal set of acceptable sets of security features that can be reached given the component web services available for tasks $t_3$ and $t_4$ is given by {$sf_1(W_1)$, $sf_2(W1)$}. Therefore, the following alternative for an assignment of remaining tasks is possible:

-    If $s_4$ is assigned to $t_3$, either $s_6$ or $s_7$ can be assigned to task $t_4$. The set of security features which is then satisfied would be $sf_1(W)$.

-    On the other hand if $s_5$ is assigned to $t_3$, $s_6$ should be assigned to task $t_4$. The set of security features satisfied would be in this case $sf_2(W)$.

A final decision can be made as already mentioned above, based on other non-functional attributes such as trust.

## Claims

1.    Method of composing web services including a method for automating an integration of security features , the method comprising:

providing a model which allows to define acceptable sets of security features (($sf_k(W))_{k \in [1,1]}$) associated with a particular workflow model (W) representing a composite web service (C), and to enable to advertise security features (SMS($s_i$)) which are supported by available candidate web services ($s_i$), and

defining, generating and performing, based on the model, an assignment procedure which allows to build, based on the available candidate web services, a secure compliant composite web service which satisfies at least one of the acceptable sets of security features (($sf_j(W))_{j \in [1,1]}$) of the workflow model, wherein the assignment procedure is an iterative process in that web services are assigned to workflow tasks one after the other **characterized in that** after each iteration (i) a partial workflow instance ($W_s^i$) is created, the partial workflow instance ($W_s^i$) offering security mechanisms which are supported by the web services already assigned and which match at least one of the acceptable sets of security features for the respective iteration step (i), and the at least one of the acceptable sets of security features is analyzed in view of the next succeeding workflow task of the workflow model so as to be successively completed to the at least one acceptable set of security features by compliant candidate web services.

2.    The method according to claim 1 wherein acceptable sets of security features (($sf_j(W))_{j \in [1,1]}$) associated with a particular workflow model (W) representing a composite web service (C) are matched against the advertised security features (SMS($s_i$)) which are supported by available candidate web services ($s_i$).

3.    The method according to claim 1 or 2 wherein given the particular workflow W consisting of n tasks ($t_i)_{i \in [1,n]}$, the assignment procedure outputs a compliant composite web service $W_s$=($s_i)_{i \in [1,n]}$ composed of a set of n component services $s_i$ that have been assigned to the tasks ($t_i)_{i \in [1,n]}$ of the particular workflow W.

4. The method according to claim 1, 2, or 3, wherein the acceptable sets of security features $((sf_j(W))_{j \in [1,1]})$ associated with a particular workflow model (W) representing a composite web service (C), and the advertised security features $(SMS(s_i))$ which are supported by available candidate web services $(s_i)$ are described using WSDL.

5. The method according to any one of claims 1 to 4 wherein for the particular workflow W an operator security features is provided that associates with each task of the workflow W a set of security mechanisms $((Sf^k(W))_{k \in [1,1]})$.

6. The method according to claim 5 wherein the sets of security mechanisms, each being associated with a respective task, and the acceptable sets of security features $((sf_j(W)_{j \in [1,1]})$ associated with the workflow W are represented in form of a matrix or table, thus indicating existing overlapping between the sets of security mechanisms, each being associated with a respective task, and the acceptable sets of security features $((sf_j(W))_{j \in [1,1]})$ associated with the workflow W.

7. The method according to claim 5 or 6 wherein the secure compliant composite web service $(W_s(s_i)_{i \in [1,n]})$ satisfies the following proposition:

$$\exists \eta \in [1,1] \text{ such that } \forall i \in [1,n] \; sf_\eta^i(W) \subseteq SMS(s_i)$$

wherein $SMS(s_i)$ corresponds to a set of security mechanisms of a respective component web service $s_i$.

8. The method according to any one of the preceding claims wherein after each iteration (i) a partial workflow instance $(W_s^i)$ is created and a group of sets of security features $(ASF_c(W_s^i) = (sf_h(W_s^i))_{h \in [1,m]})$ associated with the partial workflow instance $(W_s^i)$ and whose elements are satisfied by the partial workflow instance $(W_s^i)$ are determined, the group of sets of security features associated with the partial workflow instance $(W_s^i)$ being a subset of the group of sets of security features $(ASF_c(W)=(sf_j(W))_{j \in [1,1]})$ associated with the particular workflow (W), and, based on the group of sets of security features $(ASF_c(W_s^i) = (sf_h(W_s^i))_{h \in [1,m]})$ associated with the partial workflow instance $(W_s^i)$, security requirements that are to be satisfied by candidate component services in order to be assigned to subsequent workflow tasks of the particular workflow are computed.

9. The method according to claim 8 wherein the candidate component services are computed by using the following conditions:

$$\forall i \in [1,n] \; ASF_c\left(W_s^i\right) \subseteq ASF_c\left(W_s^{i-1}\right) \subseteq ASF_c(W)$$

wherein $ASF_c(W_s^0) = ASF_c(W)$ and $ASF_c(W_s^i)$ is the group of sets of security features associated with the partial workflow instance $W_s^i$ and $ASF_c(W)$ is the group of acceptable sets of security features associated with the particular workflow W.

10. The method according to claim 9 wherein a service $s_a$ is classified as an adequate candidate component service to be assigned to task $t_a$ of the assignment procedure if:

$$\exists T \in Min_{sm}(s_a, t_a, W_s^i) = \left\{ sf_\gamma^a(W) \middle| sf_\gamma(W) \in ASF_c\left(W_s^{i-1}\right) \right\}$$

such that $T \subseteq SMS(s_a)$ wherein $SMS(s_a)$ are the advertised security features of service $s_a$.

11. A system comprising:

a modeling unit (110) configured to provide a model which allows to define acceptable sets of security features $((sfk(W))_{k \in [1,1]})$ associated with a particular workflow model (W) representing a composite web service (C), and to enable to advertise security features $(SMS(s_i))$ which are supported by available candidate web services $(s_i)$, and

an assignment unit (120) configured to define, generate, and perform, based on the model, an assignment procedure which allows to build, based on the available candidate web services, a secure compliant composite web service which satisfies at least one of the acceptable sets of security features $((sf_j(W))_{j\in[1,1]})$ of the workflow model, the assignment procedure wherein being an iterative process in that web services are assigned to workflow tasks one after the other **characterized in that** after each iteration (i) a partial workflow instance $(W_s^i)$ is created, the partial workflow instance $(W_s^i)$ offering security mechanisms which are supported by the web services already assigned and which match at least one of the acceptable sets of security features for the respective iteration step (i), and the at least one of the acceptable sets of security features is analyzed in view of the next succeeding workflow task of the workflow model so as to be successively completed to the at least one acceptable set of security features by compliant candidate web services.

12. The system according to claim 11 wherein the assignment unit (120) is configured to match acceptable sets of security features $((sf_j(W))_{j\in[1,1]})$ associated with the particular workflow model (W) representing the composite web service (C) against the advertised security features $(SMS(s_i))$ which are supported by available candidate web services $(s_i)$.

13. The system according to claim 11 or 12 wherein given the particular workflow W consisting of n tasks $(t_i)_{i\in[1,n]}$, the assignment unit is configured to output a compliant composite web service $W_s = (s_i)_{i\in[1,n]}$ composed of a set of n component services $s_i$ that have been assigned to the tasks $(t_i)_{i\in[1,n]}$ of the particular workflow W.

14. The system according to claim 11, 12, or 13, wherein the acceptable sets of security features $((sf_j(W))_{j\in[1,1]})$ associated with a particular workflow model (W) representing a composite web service (C), and the advertised security features $(SMS(s_i))$ which are supported by available candidate web services $(s_i)$ are described using WSDL.

15. The system according to any one of claims 11 to 14 wherein the modeling unit is configured to provide, for the particular workflow W an operator security features that associates with each task of the workflow W a set of security mechanisms $((sf^k(W))_{k\in[1,n]})$.

16. The system according to claim 15 wherein the modeling unit is configured to represent the set of security mechanisms, each being associated with a respective task and the acceptable sets of security features associated with the workflow W in form of a matrix or table, thus indicating existing overlapping between the sets of security mechanisms, each being associated with a respective task, and the acceptable sets of security features $((sf_j(W))_{j\in[1,1]})$ associated with the workflow W.

17. The system according to claim 15 or 16 wherein the secure compliant composite web service $(W_s(s_i)_{i\in[1,n]})$ satisfies the following proposition:

$$\exists \eta \in [1,1] \text{ such that } \forall i \in [1,n] \; sf_\eta^i(W) \subseteq SMS(s_i)$$

wherein $SMS(s_i)$ corresponds to a set of security mechanisms of a respective component web service $s_i$.

18. The system according to any one of claims 11 to 17 wherein the assignment unit is configured to create after each iteration (i) a partial workflow instance $(W_s^i)$ and to determine a group of sets of security features $(ASF_c(W_s^i) = (sf_h(W_s^i))_{h\in[1,m]})$ associated with the partial workflow instance $(W_s^i)$ and whose elements are satisfied by the partial workflow instance $(W_s^i)$, the group of sets of security features associated with the partial workflow instance $(W_s^i)$ being a subset of the set of security features $(ASF_c(W)=(sf_j(W))_{j\in[1,1]})$ associated with the particular workflow (W), and to compute, based on the group of sets of security features $(ASF_c(W_s^i)=(sf_h(W_s^i))_{h\in[1,m]})$ associated with the partial workflow instance $(W_s^i)$, security requirements that are to be satisfied by candidate component services in order to be assigned to subsequent workflow tasks of the particular workflow.

19. The system according to claim 18 wherein the assignment unit computes the candidate component services by using the following conditions:

$$\forall i \in [1,n] \quad ASF_c\left(W_s^i\right) \subseteq ASF_c\left(W_s^{i-1}\right) \subseteq ASF_c(W)$$

wherein $ASF_c(W_s^0) = ASF_c(W)$ and $ASF_c(W_s^i)$ is the group of sets of security features associated with the partial workflow instance $W_s^i$ and $ASF_c(W)$ is the group of sets of security features associated with the particular workflow W.

**20.** The system according to claim 19 wherein the assignment unit classifies a service $s_a$ as an adequate candidate component service to be assigned to task $t_a$ of the assignment procedure if:

$$\exists T \in Min_{sm}(s_a, t_a, W_s^i) = \left\{ sf_\gamma^a(W) \middle| sf_\gamma(W) \in ASF_c\left(W_s^{i-1}\right) \right\}$$

such that $T \subseteq SMS(s_a)$ wherein $SMS(s_a)$ are the advertised security features of service $s_a$.

**21.** A computer program product having instructions that are executable by a computer, the computer program product comprising instructions which make the computer perform the steps of:

providing a model which allows to define acceptable sets of security features $((sf_k(W))_{k \in [1,1]})$ associated with a particular workflow model (W) representing a composite web service (C), and to enable to advertise security features $(SMS(s_i))$ which are supported by available candidate web services $(s_i)$, and
defining, generating and performing, based on the model, an assignment procedure which allows to build, based on the available candidate web services, a secure compliant composite web service which satisfies at least one of the acceptable sets of security features $((sf_j(W))_{j \in [1,1]})$ of the workflow model,

wherein the assignment procedure is an iterative process in that web services are assigned to workflow tasks one after the other **characterized in that** after each iteration (i) a partial workflow instance $(W_s^i)$ is created, the partial workflow instance $(W_s^i)$ offering security mechanisms which are supported by the web services already assigned and which match at least one of the acceptable sets of security features for the respective iteration step (i), and the at least one of the acceptable sets of security features is analyzed in view of the next succeeding workflow task of the workflow model so as to be successively completed to the at least one acceptable set of security features by compliant candidate web services.

**Patentansprüche**

**1.** Verfahren zum Zusammensetzen von Webdiensten, einschließlich eines Verfahrens zum Automatisieren der Integration von Sicherheitsmerkmalen, welches folgende Schritte aufweist:

Bereitstellen eines Modells, welches das Definieren akzeptierbarer Sätze von Sicherheitsmerkmalen $((sf_k(W))_{k \in [1,1]})$ in Zusammenhang mit einem bestimmten Arbeitsablaufmodell (W), wodurch ein zusammengesetzter Webdienst (C) dargestellt wird, und das Bekanntmachen von Sicherheitsmerkmalen $(SMS(s_i))$, die von verfügbaren Kandidaten-Webdiensten $(s_i)$ unterstützt werden, ermöglicht, und
Definieren, Erzeugen und Ausführen, auf der Grundlage des Modells, einer Zuweisungsprozedur, die es ermöglicht, auf der Grundlage der verfügbaren Kandidaten-Webdienste einen sicheren, konformen zusammengesetzten Webdienst aufzubauen, der mindestens einen der akzeptierbaren Sätze von Sicherheitsmerkmalen $((sf_j(W))_{j \in [1,1]})$ des Arbeitsablaufmodells erfüllt, wobei die Zuweisungsprozedur in der Hinsicht ein iterativer Prozess ist, dass Webdienste nacheinander Arbeitsablaufaufgaben zugewiesen werden,

**dadurch gekennzeichnet, dass**
nach jeder Iteration (i) eine Teil-Arbeitsablaufinstanz $(W_s^i)$ erzeugt wird, wobei die Teil-Arbeitsablaufinstanz $(W_s^1)$ Sicherheitsmechanismen bietet, die von den bereits zugewiesenen Webdiensten unterstützt werden und die mit mindestens einem der akzeptierbaren Sätze von Sicherheitsmerkmalen für den jeweiligen Iterationsschritt (i) übereinstimmen, und der mindestens eine der akzeptierbaren Sätze von Sicherheitsmerkmalen in Bezug auf die nachfolgende Arbeitsablaufaufgabe des Arbeitsablaufmodells analysiert wird, so dass er schrittweise durch konforme Kandidaten-Webdienste zu dem mindestens einen akzeptierbaren Satz von Sicherheitsmerkmalen vervollständigt wird.

2. Verfahren nach Anspruch 1, wobei akzeptierbare Sätze von Sicherheitsmerkmalen $((sf_j(W))_{j\in[1,1]})$ in Zusammenhang mit einem bestimmten Arbeitsablaufmodell (W), wodurch ein zusammengesetzter Webdienst (C) dargestellt wird, mit den bekanntgemachten Sicherheitsmerkmalen (SMS $(s_j)$) verglichen werden, die von verfügbaren Kandidaten-Webdiensten $(s_i)$ unterstützt werden.

3. Verfahren nach Anspruch 1 oder 2, wobei, wenn der aus n Aufgaben $(t_i)_{i\in[1,n]}$ bestehende bestimmte Arbeitsablauf W gegeben ist, die Zuweisungsprozedur einen konformen zusammengesetzten Webdienst $W_s = (s_i)_{i\in[1,n]}$ ausgibt, der aus einem Satz von n Komponentendiensten $s_i$ zusammengesetzt ist, die den Aufgaben $(t_i)_{i\in[1,n]}$ des bestimmten Arbeitsablaufs W zugewiesen wurden.

4. Verfahren nach Anspruch 1, 2 oder 3, wobei die akzeptierbaren Sätze von Sicherheitsmerkmalen $((sf_j(W))_{j\in[1,1]})$ in Zusammenhang mit einem bestimmten Arbeitsablaufmodell (W), wodurch ein zusammengesetzter Webdienst (C) dargestellt wird, und die bekanntgemachten Sicherheitsmerkmale (SMS$(s_i)$), die von verfügbaren Kandidaten-Webdiensten $(s_i)$ unterstützt werden, unter Verwendung von WSDL beschrieben werden.

5. Verfahren nach einem der Ansprüche 1 bis 4, wobei für den bestimmten Arbeitsablauf W ein Sicherheitsmerkmale-Operator bereitgestellt wird, das jeder Aufgabe des Arbeitsablaufs W einen Satz von Sicherheitsmechanismen $((sf^k(W))_{k\in[1,n]})$ zuordnet.

6. Verfahren nach Anspruch 5, wobei die Sätze von Sicherheitsmechanismen, die jeweils einer jeweiligen Aufgabe zugeordnet sind, und die akzeptierbaren Sätze von Sicherheitsmerkmalen $((sf_j(W))_{j\in[1,1]})$ in Zusammenhang mit dem Arbeitsablauf W in Form einer Matrix oder Tabelle dargestellt werden, so dass eine existierende Überlappung zwischen den Sätzen von Sicherheitsmechanismen, die jeweils in Zusammenhang mit einer jeweiligen Aufgabe stehen, und den akzeptierbaren Sätzen von Sicherheitsmerkmalen $((sf_j(W))_{j\in[1,1]})$ in Zusammenhang mit dem Arbeitsablauf W angegeben wird.

7. Verfahren nach Anspruch 5 oder 6, wobei der sichere konforme zusammengesetzte Webdienst $(W_s (s_i)_{i\in[1,n]})$ die folgende Aussage erfüllt:

$$\exists \eta \in [1, l], \text{ so dass } \forall i \in [1, n] \ sf_\eta^{\ i}(W) \subseteq SMS(s_i)$$

wobei SMS$(s_i)$ einem Satz von Sicherheitsmechanismen eines jeweiligen Komponenten-Webdiensts $s_i$ entspricht.

8. Verfahren nach einem der vorhergehenden Ansprüche, wobei nach jeder Iteration (i) eine Teil-Arbeitsablaufinstanz $(W_s^i)$ erzeugt wird und eine Gruppe von Sätzen von Sicherheitsmerkmalen $(ASF_c (W_s^i) = (sf_h(W_s^i))_{h\in[1,m]})$ in Zusammenhang mit der Teil-Arbeitsablaufinstanz $(W_s^i)$, deren Elemente von der Teil-Arbeitsablaufinstanz $(W_s^i)$ erfüllt werden, bestimmt wird, wobei die Gruppe von Sätzen von Sicherheitsmerkmalen in Zusammenhang mit der Teil-Arbeitsablaufinstanz $(W_s^i)$ eine Untergruppe der Gruppe von Sätzen von Sicherheitsmerkmalen $(ASF_c(W) = (sf_j(W))_{j\in[1,1]})$ in Zusammenhang mit dem bestimmten Arbeitsablauf (W) ist, und auf der Grundlage der Gruppe von Sätzen von Sicherheitsmerkmalen $(ASF_c(W_s^i) = (sf_h(W_s^i))_{h\in[1,m]})$ in Zusammenhang mit der Teil-Arbeitsablaufinstanz $(W_s^i)$ Sicherheitsanforderungen berechnet werden, die von Kandidaten-Komponentendiensten zu erfüllen sind, damit sie nachfolgenden Arbeitsablaufaufgaben des bestimmten Arbeitsablaufs zugewiesen werden können.

9. Verfahren nach Anspruch 8, wobei die Kandidaten-Komponentendienste unter Verwendung der folgenden Bedingungen berechnet werden:

$$\forall i \in [1, n] \ ASF_C(W_s^{\ i}) \subseteq ASF_C(W_s^{\ i-1}) \subseteq ASF_C(W)$$

wobei $ASF_c (W_s^0) = ASF_c(W)$ und $ASF_c (W_s^i)$ die Gruppe von Sätzen von Sicherheitsmerkmalen in Zusammenhang mit der Teil-Arbeitsablaufinstanz $W_s^i$ ist und $ASF_c(W)$ die Gruppe von akzeptierbaren Sätzen von Sicherheitsmerkmalen in Zusammenhang mit dem bestimmten Arbeitsablauf W ist.

10. Verfahren nach Anspruch 9, wobei ein Dienst $s_a$ als ein geeigneter Kandidaten-Komponentendienst klassifiziert wird, der der Aufgabe $t_a$ der Zuweisungsprozedur zuzuweisen ist, wenn:

$$\exists T \in \text{Min}_{sm}\left(s_a, t_a, W_s^i\right) = \left\{sf_\gamma^a(W) \middle| sf_\gamma(W) \in \text{ASF}_C\left(W_s^{i-1}\right)\right\}$$

ist, so dass $T \subseteq SMS(s_a)$ ist, wobei $SMS(s_a)$ die bekanntgemachten Sicherheitsmerkmale des Diensts $s_a$ sind.

**11.** System, welches aufweist:

eine Modellbildungseinheit (110), die konfiguriert ist, um ein Modell bereitzustellen, welches das Definieren akzeptierbarer Sätze von Sicherheitsmerkmalen $((sf_k(W)_{k\in[1,1]})$ in Zusammenhang mit einem bestimmten Arbeitsablaufmodell (W), wodurch ein zusammengesetzter Webdienst (C) dargestellt wird, und das Bekanntmachen von Sicherheitsmerkmalen $(SMS(s_i))$, die von verfügbaren Kandidaten-Webdiensten $(s_i)$ unterstützt werden, ermöglicht, und
eine Zuweisungseinheit (120), die konfiguriert ist, um auf der Grundlage des Modells eine Zuweisungsprozedur zu definieren, zu erzeugen und auszuführen, die es ermöglicht, auf der Grundlage der verfügbaren Kandidaten-Webdienste einen sicheren, konformen zusammengesetzten Webdienst aufzubauen, der mindestens einen der akzeptierbaren Sätze von Sicherheitsmerkmalen $((sf_j(W)_{j\in[1,1]})$ des Arbeitsablaufmodells erfüllt, wobei die Zuweisungsprozedur in der Hinsicht ein iterativer Prozess ist, dass Webdienste nacheinander Arbeitsablaufaufgaben zugewiesen werden,

**dadurch gekennzeichnet, dass**
nach jeder Iteration (i) eine Teil-Arbeitsablaufinstanz $(W_s^i)$ erzeugt wird, wobei die Teil-Arbeitsablaufinstanz $(W_s^i)$ Sicherheitsmechanismen bietet, die von den bereits zugewiesenen Webdiensten unterstützt werden und die mit mindestens einem der akzeptierbaren Sätze von Sicherheitsmerkmalen für den jeweiligen Iterationsschritt (i) übereinstimmen, und der mindestens eine der akzeptierbaren Sätze von Sicherheitsmerkmalen in Bezug auf die nachfolgende Arbeitsablaufaufgabe des Arbeitsablaufmodells analysiert wird, so dass er schrittweise durch konforme Kandidaten-Webdienste zu dem mindestens einen akzeptierbaren Satz von Sicherheitsmerkmalen vervollständigt wird.

**12.** System nach Anspruch 11, wobei die Zuweisungseinheit (120) konfiguriert ist, um akzeptierbare Sätze von Sicherheitsmerkmalen $(sf_j(W)_{j\in[1,1]})$ in Zusammenhang mit dem bestimmten Arbeitsablaufmodell (W), wodurch der zusammengesetzte Webdienst (C) dargestellt wird, mit den bekanntgemachten Sicherheitsmerkmalen $(SMS(s_i))$ zu vergleichen, die von verfügbaren Kandidaten-Webdiensten $(s_i)$ unterstützt werden.

**13.** System nach Anspruch 11 oder 12, wobei, wenn der aus n Aufgaben $(t_i)_{i\in[(1,n]}$ bestehende bestimmte Arbeitsablauf W gegeben ist, die Zuweisungseinheit konfiguriert ist, einen konformen zusammengesetzten Webdienst $W_s = (S_i)_{i\in[1,n]}$ auszugeben, der aus einem Satz von n Komponentendiensten $s_i$ zusammengesetzt ist, die den Aufgaben $(t_i)_{i\in[1,n]}$ des bestimmten Arbeitsablaufs W zugewiesen wurden.

**14.** System nach Anspruch 11, 12 oder 13, wobei die akzeptierbaren Sätze von Sicherheitsmerkmalen $((sf_j(W)_{j\in[1,1]})$ in Zusammenhang mit einem bestimmten Arbeitsablaufmodell (W), wodurch ein zusammengesetzter Webdienst (C) dargestellt wird, und die bekanntgemachten Sicherheitsmerkmale $(SMS(s_i))$, die von verfügbaren Kandidaten-Webdiensten $(s_i)$ unterstützt werden, unter Verwendung von WSDL beschrieben werden.

**15.** System nach einem der Ansprüche 11 bis 14, wobei die Modellbildungseinheit konfiguriert ist, für den bestimmten Arbeitsablauf W ein Sicherheitsmerkmale-Operator bereitzustellen, das jeder Aufgabe des Arbeitsablaufs W einen Satz von Sicherheitsmechanismen $((sf^k(W))_{k\in[1,n]})$ zuordnet.

**16.** System nach Anspruch 15, wobei die Modellbildungseinheit konfiguriert ist, den Satz von Sicherheitsmechanismen, die jeweils einer jeweiligen Aufgabe zugeordnet sind, und die akzeptierbaren Sätze von Sicherheitsmerkmalen in Zusammenhang mit dem Arbeitsablauf W in Form einer Matrix oder Tabelle darzustellen, so dass eine existierende Überlappung zwischen den Sätzen von Sicherheitsmechanismen, die jeweils in Zusammenhang mit einer jeweiligen Aufgabe stehen, und den akzeptierbaren Sätzen von Sicherheitsmerkmalen $((sf_j(W))_{j\in[1,1]})$ in Zusammenhang mit dem Arbeitsablauf W angegeben wird.

**17.** System nach Anspruch 15 oder 16, wobei der sichere konforme zusammengesetzte Webdienst ($W_s$ ($s_i$) $_{i\in[1,n]}$) die folgende Aussage erfüllt:

$$\exists \eta \in [1, l], \text{ so dass } \forall i \in [1, n] \; sf_\eta^i(W) \subseteq SMS(s_i)$$

wobei SMS($s_i$) einem Satz von Sicherheitsmechanismen eines jeweiligen Komponenten-Webdiensts $s_i$ entspricht.

**18.** System nach einem der Ansprüche 11 bis 17, wobei die Zuweisungseinheit konfiguriert ist, nach jeder Iteration (i) eine Teil-Arbeitsablaufinstanz ($W_s^i$) zu erzeugen und eine Gruppe von Sätzen von Sicherheitsmerkmalen ($ASF_c$ ($W_s^i$) = ($sf_h(W_s^i)$)$_{h\in[1,m]}$) in Zusammenhang mit der Teil-Arbeitsablaufinstanz ($W_s^i$), deren Elemente von der Teil-Arbeitsablaufinstanz ($W_s^i$) erfüllt werden, zu bestimmen, wobei die Gruppe von Sätzen von Sicherheitsmerkmalen in Zusammenhang mit der Teil-Arbeitsablaufinstanz ($W_s^i$) eine Untergruppe des Satzes von Sicherheitsmerkmalen ($ASF_c(W)$ = ($sf_j(W)$)$_{j\in[1,l]}$) in Zusammenhang mit dem bestimmten Arbeitsablauf (W) ist, und auf der Grundlage der Gruppe von Sätzen von Sicherheitsmerkmalen ($ASF_c(W_s^i)$ = ($sf_h(W_s^i)$)$_{h\in[1,m]}$) in Zusammenhang mit der Teil-Arbeitsablaufinstanz ($W_s^i$) Sicherheitsanforderungen zu berechnen, die von Kandidaten-Komponentendiensten zu erfüllen sind, damit sie nachfolgenden Arbeitsablaufaufgaben des bestimmten Arbeitsablaufs zugewiesen werden können.

**19.** System nach Anspruch 18, wobei die Zuweisungseinheit die Kandidaten-Komponentendienste unter Verwendung der folgenden Bedingungen berechnet:

$$\forall i \in [1, n] \; ASF_C(W_s^i) \subseteq ASF_C(W_s^{i-1}) \subseteq ASF_C(W)$$

wobei $ASF_c(W_s^0) = ASF_c(W)$ und $ASF_c(W_s^i)$ die Gruppe von Sätzen von Sicherheitsmerkmalen in Zusammenhang mit der Teil-Arbeitsablaufinstanz $W_s^i$ ist und $ASF_c(W)$ die Gruppe von Sätzen von Sicherheitsmerkmalen in Zusammenhang mit dem bestimmten Arbeitsablauf W ist.

**20.** System nach Anspruch 19, wobei die Zuweisungseinheit einen Dienst $s_a$ als einen geeigneten Kandidaten-Komponentendienst klassifiziert, der der Aufgabe $t_a$ der Zuweisungsprozedur zuzuweisen ist, wenn:

$$\exists T \in Min_{sm}\left(s_a, t_a, W_s^i\right) = \left\{ sf_\gamma^a(W) \middle| sf_\gamma(W) \in ASF_C\left(W_s^{i-1}\right) \right\}$$

ist, so dass $T \subseteq SMS(s_a)$ ist, wobei SMS($s_a$) die bekanntgemachten Sicherheitsmerkmale des Diensts $s_a$ sind.

**21.** Computerprogrammprodukt mit Befehlen, die von einem Computer ausführbar sind, wobei das Computerprogrammprodukt Befehle aufweist, die den Computer veranlassen, folgende Schritte auszuführen:

Bereitstellen eines Modells, welches das Definieren akzeptierbarer Sätze von Sicherheitsmerkmalen (($sf_k$ (W)$_{k\in[1,l]}$) in Zusammenhang mit einem bestimmten Arbeitsablaufmodell (W), wodurch ein zusammengesetzter Webdienst (C) dargestellt wird, und das Bekanntmachen von Sicherheitsmerkmalen (SMS($s_i$)), die von verfügbaren Kandidaten-Webdiensten ($s_i$) unterstützt werden, ermöglicht, und
Definieren, Erzeugen und Ausführen, auf der Grundlage des Modells, einer Zuweisungsprozedur, die es ermöglicht, auf der Grundlage der verfügbaren Kandidaten-Webdienste einen sicheren, konformen zusammengesetzten Webdienst aufzubauen, der mindestens einen der akzeptierbaren Sätze von Sicherheitsmerkmalen (($sf_j(W)$)$_{j\in[1,l]}$) des Arbeitsablaufmodells erfüllt, wobei die Zuweisungsprozedur in der Hinsicht ein iterativer Prozess ist, dass Webdienste nacheinander Arbeitsablaufaufgaben zugewiesen werden,

**dadurch gekennzeichnet, dass**
nach jeder Iteration (i) eine Teil-Arbeitsablaufinstanz ($W_s^i$) erzeugt wird, wobei die Teil-Arbeitsablaufinstanz ($W_s^i$)

Sicherheitsmechanismen bietet, die von den bereits zugewiesenen Webdiensten unterstützt werden und die mit mindestens einem der akzeptierbaren Sätze von Sicherheitsmerkmalen für den jeweiligen Iterationsschritt (i) übereinstimmen, und der mindestens eine der akzeptierbaren Sätze von Sicherheitsmerkmalen in Bezug auf die nachfolgende Arbeitsablaufaufgabe des Arbeitsablaufmodells analysiert wird, so dass er schrittweise durch konforme Kandidaten-Webdienste zu dem mindestens einen akzeptierbaren Satz von Sicherheitsmerkmalen vervollständigt wird.

## Revendications

1. Procédé de composition de services de la toile mondiale incluant un procédé pour automatiser une intégration de fonctions de sécurité, le procédé comportant les étapes consistant à:

   fournir un modèle qui permet de définir des ensembles acceptables de fonctions de sécurité $((sf_k(W))_{k \in [1,1]})$ associés à un modèle de flux de travaux particulier (W) représentant un service de la toile mondiale composite (C), et qui permet d'annoncer des fonctions de sécurité (SMS $(s_i)$) lesquelles sont supportées par des services de la toile mondiale candidats disponibles $(s_i)$, et

   définir, générer et exécuter, sur la base du modèle, une procédure d'attribution qui permet de construire, sur la base des services de la toile mondiale candidats disponibles, un service de la toile mondiale composite conforme sécurisé qui satisfait à au moins un des ensembles acceptables de fonctions de sécurité $((sf_j(W))_{j \in [1,1]})$ du modèle de flux de travaux, dans lequel la procédure d'attribution est un processus itératif en ce sens que des services de la toile mondiale sont attribués à des tâches de flux de travaux l'un après l'autre, **caractérisé en ce que** après chaque itération (i) une instance de flux de travaux partielle $(W_s^i)$ est créée, l'instance de flux de travaux partielle $(W_s^i)$ offrant des mécanismes de sécurité qui sont supportés par les services de la toile mondiale déjà attribués et qui s'adaptent au moins à l'un des ensembles acceptables de fonctions de sécurité pour l'étape d'itération respective (i), et le au moins un des ensembles acceptables de fonctions de sécurité est analysé au vu de la tâche de flux de travaux suivante du modèle de flux de travaux de manière à être réalisé successivement dans le au moins un ensemble acceptable de fonctions de sécurité par des services de la toile mondiale candidats conformes.

2. Procédé selon la revendication 1, dans lequel des ensembles acceptables de fonctions de sécurité $((sf_j(W))_{j \in [1,1]})$ associés à un modèle de flux de travaux particulier (W) représentant un service de la toile mondiale composite (C) sont comparés avec les fonctions de sécurité annoncées (SMS$(s_i)$) lesquelles sont supportées par des services de la toile mondiale candidats disponibles $(s_i)$.

3. Procédé selon la revendication 1 ou 2, dans lequel, étant donné le flux de travaux particulier W constitué de n tâches $(ti)_{i \in [1,n]}$, la procédure d'attribution délivre en sortie un service de la toile mondiale composite conforme $W_s = (s_i)_{i \in [1,n]}$ constitué d'un ensemble de n services de composants $s_i$ qui ont été attribués aux tâches $(t_i)_{i \in [1,n]}$ du flux de travaux particulier W.

4. Procédé selon la revendication 1, 2 ou 3, dans lequel les ensembles acceptables de fonctions de sécurité $((sf_j(W)_{j \in [1,1]})$ associés à un modèle de flux de travaux particulier (W) représentant un service de la toile mondiale composite (C), et les fonctions de sécurité annoncées (SMS$(s_i)$) lesquelles sont supportées par des services de la toile mondiale candidats disponibles sont décrits en utilisant WSDL.

5. Procédé selon l'une quelconque des revendications 1 à 4, dans lequel pour le flux de travaux particulier W, un opérateur de fonctions de sécurité est fourni lequel associe à chaque tâche du flux de travaux W un ensemble de mécanismes de sécurité $((sf^k(W)_{k \in [1,n]}))$ .

6. Procédé selon la revendication 5, dans lequel les ensembles de mécanismes de sécurité, chacun étant associé à une tâche respective, et les ensembles acceptables de fonctions de sécurité $((sf_j(W))_{j \in [1,1]})$ associés au flux de travaux W sont représentés sous la forme d'une matrice ou d'un tableau, indiquant ainsi un chevauchement existant entre les ensembles de mécanismes de sécurité, chacun étant associé à une tâche respective, et les ensembles acceptables de fonctions de sécurité $((sf_j(W))_{j \in [1,1]})$ associés au flux de travaux W.

7. Procédé selon la revendication 5 ou 6, dans lequel le service de la toile mondiale composite conforme sécurisé $(W_s (s_i)_{i \in [1,n]})$ satisfait à la proposition suivante:

$$\exists \eta \in [1, l] \text{ de sorte que } \forall i \in [1, n] \ sf_\eta^i(W) \subseteq SMS(s_i)$$

où $SMS(s_i)$ correspond à un ensemble de mécanismes de sécurité d'un service de la toile mondiale de composant respectif $s_i$.

**8.** Procédé selon l'une quelconque des revendications précédentes, dans lequel après chaque itération (i), une instance de flux de travaux partielle ($W_s^i$) est créée et un groupe d'ensembles de fonctions de sécurité ($ASF_c(W_s^i) = (sf_h(W_s^i)_{h \in [1,m]}$) associé à l'instance de flux de travaux partielle ($W_s^i$) et dont des éléments sont satisfaits par l'instance de flux de travaux partielle ($W_s^i$) est déterminé, le groupe d'ensembles de fonctions de sécurité associé à l'instance de flux de travaux partielle ($W_s^i$) étant un sous-ensemble du groupe d'ensembles de fonctions de sécurité ($ASF_c(W)=(sf_j(W)_{j \in [1,1]}$) associé au flux de travaux particulier (W) et, sur la base du groupe d'ensembles de fonctions de sécurité ($ASF_c(W_s^i)=(sf_h(W_s^i)_{h \in [1,m]}$) associé à l'instance de flux de travaux partielle ($W_s^i$), des impératifs de sécurité qui doivent être satisfaits par des services de composants candidats afin d'être attribués à des tâches de flux de travaux ultérieures du flux de travaux particulier sont calculés.

**9.** Procédé selon la revendication 8, dans lequel les services de composants candidats sont calculés en utilisant les conditions suivantes:

$$\forall i \in [1, n] \ ASF_c(W_s^i) \subseteq ASF_c(W_s^{i-1}) \subseteq ASF_c(W)$$

où $ASF_c(W_s^0)=ASF_c(W)$ et $ASF_c(W_s^i)$ est le groupe d'ensembles de fonctions de sécurité associé à l'instance de flux de travaux partielle $W_s^i$ et $ASF_c(W)$ est le groupe d'ensembles acceptables de fonctions de sécurité associé au flux de travaux particulier W.

**10.** Procédé selon la revendication 9 dans lequel un service $s_a$ est classé en tant que service de composant candidat adéquat à attribuer à la tâche $t_a$ de la procédure d'attribution si:

$\exists T \in Min_{sm}(s_a, t_a, W_s^i) = \{sf_\gamma^a(W)|sf_\gamma(W) \in ASF_c(W_s^{i-1})\}$ de sorte que $T \subseteq SMS(s_a)$, où $SMS(s_a)$ sont les fonctions de sécurité annoncées de service $s_a$.

**11.** Système comportant :

une unité de modélisation (110) configurée pour fournir un modèle qui permet de définir des ensembles acceptables de fonctions de sécurité ($(sf_k(W))_{k \in [1,1]}$) associés à un modèle de flux de travaux particulier (W) représentant un service de la toile mondiale composite (C), et qui permet d'annoncer des fonctions de sécurité ($SMS(s_i)$) lesquelles sont supportées par des services de la toile mondiale candidats disponibles ($s_i$), et une unité d'attribution (120) configurée pour définir, générer et exécuter, sur la base du modèle, une procédure d'attribution qui permet de construire, sur la base des services de la toile mondiale candidats disponibles, un service de la toile mondiale composite conforme sécurisé qui satisfait à au moins un des ensembles acceptables de fonctions de sécurité ($(sf_j(W))_{j \in [1,1]}$) du modèle de flux de travaux, dans lequel la procédure d'attribution est un processus itératif en ce sens que des services de la toile mondiale sont attribués à des tâches de flux de travaux l'un après l'autre, **caractérisé en ce que** après chaque itération (i) une instance de flux de travaux partielle ($W_s^i$) est créée, l'instance de flux de travaux partielle ($W_s^i$) offrant des mécanismes de sécurité qui sont supportés par les services de la toile mondiale déjà attribués et qui s'adaptent au moins à l'un des ensembles acceptables de fonctions de sécurité pour l'étape d'itération respective (i), et le au moins un des ensembles acceptables de fonctions de sécurité est analysé au vu de la tâche de flux de travaux suivante du modèle de flux de travaux de manière à être réalisé successivement dans le au moins un ensemble acceptable de fonctions de sécurité par des services de la toile mondiale candidats conformes.

**12.** Système selon la revendication 11, dans lequel l'unité d'attribution (120) est configurée pour adapter des ensembles acceptables de fonctions de sécurité ($(sf_j(W))_{j \in [1,1]}$) associés au modèle de flux de travaux particulier (W) représentant le service de la toile mondiale composite (C) par rapport aux fonctions de sécurité annoncées ($SMS(s_i)$) lesquelles sont supportées par des services de la toile mondiale candidats disponibles ($s_i$).

**13.** Système selon la revendication 11 ou 12, dans lequel, étant donné le flux de travaux particulier W constitué de n tâches $(t_i)_{i \in [1,n]}$, la procédure d'attribution délivre en sortie un service de la toile mondiale composite conforme $W_s = (s_i)_{i \in [1,n]}$ constitué d'un ensemble de n services de composants $s_i$ qui ont été attribués aux tâches $(t_i)_{i \in [1,n]}$ du flux de travaux particulier W.

**14.** Système selon la revendication 11, 12 ou 13, dans lequel les ensembles acceptables de fonctions de sécurité $((sf_j(W))_{j \in [1,1]}$ associés à un modèle de flux de travaux particulier (W) représentant un service de la toile mondiale composite (C), et les fonctions de sécurité annoncées $(SMS(s_i))$ lesquelles sont supportées par des services de la toile mondiale candidats disponibles sont décrits en utilisant WSDL.

**15.** Système selon l'une quelconque des revendications 11 à 14, dans lequel pour le flux de travaux particulier W, un opérateur de fonctions de sécurité est fourni lequel associe à chaque tâche du flux de travaux W un ensemble de mécanismes de sécurité $((Sf^k(W))_{k \in [1,n]})$.

**16.** Système selon la revendication 15, dans lequel l'unité de modélisation est configurée pour représenter l'ensemble de mécanismes de sécurité, chacun étant associé à une tâche respective, et les ensembles acceptables de fonctions de sécurité associés au flux de travaux W sous la forme d'une matrice ou d'un tableau, indiquant ainsi un chevauchement existant entre les ensembles de mécanismes de sécurité, chacun étant associé à une tâche respective, et les ensembles acceptables de fonctions de sécurité $((sf_j(w))_{j \in [1,1]}$ associés au flux de travaux W.

**17.** Système selon la revendication 15 ou 16, dans lequel le service de la toile mondiale composite conforme sécurisé $(W_s(s_i)_{i \in [1,n]})$ satisfait à la proposition suivante:

$$\exists \eta \in [1,1] \text{ de sorte que } \forall i \in [1,n] \ sf_\eta^i(W) \subseteq SMS(s_i)$$

où $SMS(s_i)$ correspond à un ensemble de mécanismes de sécurité d'un service de la toile mondiale de composant respectif $s_i$.

**18.** Système selon l'une quelconque des revendications 11 à 17, dans lequel l'unité d'attribution est configurée pour créer après chaque itération (i), une instance de flux de travaux partielle $(W_s^i)$ et pour déterminer un groupe d'ensembles de fonctions de sécurité $(ASF_c(W_s^i) = (sf_h(W_s^i))_{h \in [1,m]})$ associé à l'instance de flux de travaux partielle $(W_s^i)$ et dont des éléments sont satisfaits par l'instance de flux de travaux partielle $(W_s^i)$, le groupe d'ensembles de fonctions de sécurité associé à l'instance de flux de travaux partielle $(W_s^i)$ étant un sous-ensemble du groupe d'ensembles de fonctions de sécurité $(ASF_c(W) = (sf_j(W)_{j \in [1,1]})$ associé au flux de travaux particulier (W) et, pour calculer, sur la base du groupe d'ensembles de fonctions de sécurité $(ASF_c(W_s^i) = (Sf_h(W_s^i))_{h \in [1,m]})$ associé à l'instance de flux de travaux partielle $(W_s^i)$, des impératifs de sécurité qui doivent être satisfaits par des services de composants candidats afin d'être attribués à des tâches de flux de travaux ultérieures du flux de travaux particulier.

**19.** Système selon la revendication 18, dans lequel l'unité d'attribution calcule les services de composants candidats en utilisant les conditions suivantes:

$$\forall i \in [1,n] \ ASF_c\left(W_s^i\right) \subseteq ASF_c\left(W_s^{i-1}\right) \subseteq ASF_c\left(W\right)$$

où $ASF_c(W_s^0) = ASF_c(W)$ et $ASF_c(W_s^i)$ est le groupe d'ensembles de fonctions de sécurité associé à l'instance de flux de travaux partiels $W_s^i$ et $ASF_c(W)$ est le groupe d'ensembles acceptables de fonctions de sécurité associé au flux de travaux particulier W.

**20.** Système selon la revendication 19, dans lequel l'unité d'attribution classe un service sa en tant que service de composant candidat adéquat à attribuer à la tâche $t_a$ de la procédure d'attribution si:

$$\exists T \in Min_{sm}(s_a, t_a, W_s^i) = \left\{ sf_\gamma^a(W) \middle| sf_\gamma(W) \in ASF_c\left(W_s^{i-1}\right) \right\} \text{ de sorte que } T \subseteq SMS(s_a),$$

où $SMS(s_a)$ sont les fonctions de sécurité annoncées de service $s_a$.

**21.** Produit de programme informatique ayant des instructions qui sont exécutables par un ordinateur, le produit de programme informatique comportant des instructions qui amènent l'ordinateur à exécuter les étapes consistant à :

fournir un modèle qui permet de définir des ensembles acceptables de fonctions de sécurité $((Sf_k(W))_{k \in [1,1]}$ associés à un modèle de flux de travaux particulier (W) représentant un service de la toile mondiale composite (C), et qui permet d'annoncer des fonctions de sécurité $(SMS(s_i))$ lesquelles sont supportées par des services de la toile mondiale candidats disponibles $(s_i)$, et

définir, générer et exécuter, sur la base du modèle, une procédure d'attribution qui permet de construire, sur la base des services de la toile mondiale candidats disponibles, un service de la toile mondiale composite conforme sécurisé qui satisfait à au moins un des ensembles acceptables de fonctions de sécurité $((sf_j(W)_{j \in [1,1]}$ du modèle de flux de travaux, dans lequel la procédure d'attribution est un processus itératif en ce sens que des services de la toile mondiale sont attribués à des tâches de flux de travaux l'une après l'autre, **caractérisé en ce que** après chaque itération (i) une instance de flux de travaux partielle $(W_s i)$ est créée, l'instance de flux de travaux partielle $(W_s^i)$ offrant des mécanismes de sécurité qui sont supportés par les services de la toile mondiale déjà attribués et qui s'adaptent au moins à l'un des ensembles acceptables de fonctions de sécurité pour l'étape d'itération respective (i), et le au moins un des ensembles acceptables de fonctions de sécurité est analysé au vu de la tâche de flux de travaux suivante du modèle de flux de travaux de manière à être réalisé successivement dans le au moins un ensemble acceptable de fonctions de sécurité par des services de la toile mondiale candidats conformes.

10

1 → 2

W

11

12

1 → 2

W_s

Fig. 1

10

111

110

120

112

Fig. 2

| $ASF_C(W_1)$ | $t_1$ | $t_2$ | $t_3$ | $t_4$ |
|---|---|---|---|---|
| $sf_1$ | $\begin{pmatrix} IBE \\ SAML \end{pmatrix}$ | $(\,WS\text{-}^{\bullet}\,)$ | $\begin{pmatrix} IBE \\ RSA \end{pmatrix}$ | $(\,RSA\,)$ |
| $sf_2$ | $\begin{pmatrix} IBE \\ SHA \end{pmatrix}$ | $(\,WS-Trust\,)$ | $\begin{pmatrix} IBE \\ SAML \end{pmatrix}$ | $\begin{pmatrix} RSA \\ SAML \end{pmatrix}$ |
| $sf_3$ | $\begin{pmatrix} IBE \\ XMLSignature \end{pmatrix}$ | $(\,WS\text{-}^{\bullet}\,)$ | $\begin{pmatrix} IBE \\ WS-Trust \end{pmatrix}$ | $\begin{pmatrix} IBE \\ SAML \end{pmatrix}$ |

Fig.3

Fig. 4

| | $t_1$ | $t_2$ | $t_3$ | $t_4$ |
|---|---|---|---|---|
| $s_1$ | $\left( \begin{array}{c} IBE \\ SAML \\ SHA \\ XMLSignature \\ RSA \end{array} \right)$ | | | |
| $s_2$ | $\left( SAML \right)$ | | | |
| $s_3$ | | $\left( \begin{array}{c} WS-Trust \\ WS-\bullet \end{array} \right)$ | | |
| $s_4$ | | | $\left( \begin{array}{c} IBE \\ RSA \\ XMLSignature \end{array} \right)$ | |
| $s_5$ | | | $\left( \begin{array}{c} IBE \\ SAML \end{array} \right)$ | |
| $s_6$ | | | | $\left( \begin{array}{c} RSA \\ SAML \end{array} \right)$ |
| $s_7$ | | | | $\left( RSA \right)$ |
| $s_8$ | | | | $\left( \begin{array}{c} IBE \\ SAML \end{array} \right)$ |

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070162976 A

**Non-patent literature cited in the description**

- Composition and evaluation of trustworthy web services. **S. J. H. Yang ; J. S. F. Hsieh ; B. C. W. Lan ; J.-Y. Chung.** BSN '05: Proceedings of the IEEE EEE05 international workshop on Business services networks. IEEE Press, 2005, 5-5
- Web service composition: A security perspective. **B. Carminati ; E. Ferrari ; P. C. K. Hung.** WIRI'05: Proceedings of the International Workshop on Challenges in Web Information Retrieval and Integration. IEEE Computer Society, 2005, 248-253
- Fine-grain, end-to-end security for web service compositions. **L. Singaravelu ; C. Pu.** IEEE SCC. IEEE Computer Society, 2007, 212-219
- Dynamic weaving of security aspects in service composition. **H. Song ; Y. Sun ; Y. Yin ; S. Zheng.** SOSE'06: Proceedings of the Second IEEE International Symposium on Service-Oriented System Engineering. IEEE Computer Society, 2006, 189-196
- **D.-H. Xua ; Y. Qi ; D. Hou ; Y. Chen ; L. Liu.** A formal model for security-aware dynamic web services composition. *Computational Science and its Applications, 2007. ICCSA 2007. International Conference on,* 2007, 139-143

- **F. Montagut ; R. Molva.** Augmenting Web services composition with transactional requirements. *ICWS 2006, IEEE International Conference on Web Services,* 18 September 2006
- Automatic composition of web services with contingency plans. **L. A. G. da Costa ; P. F. Pires ; M. Mattoso.** ICWS '04: Proceedings of the IEEE International Conference on Web Services. IEEE Computer Society, 2004, 454
- A graph-based approach to web services composition. **S. V. Hashemian ; F. Mavaddat.** SAINT '05: Proceedings of the The 2005 Symposium on Applications and the Internet. IEEE Computer Society, 2005, 183-189
- **M. Laukkanen ; H. Helin.** Composing workflows of semantic web services. *Proceedings of the Workshop on WebServices and Agent-based Engineering,* 2003
- A service creation environment based on end to end composition of web services. **V. Agarwal ; K. Dasgupta ; N. Karnik ; A. Kumar ; A. Kundu ; S. Mittal ; B. Srivastava.** WWW '05: Proceedings of the 14th international conference on World Wide Web. ACM Press, 2005, 128-137